# EUROPEAN PATENT APPLICATION

(11) **EP 4 286 710 A1**
(43) Date of publication of application: **06.12.2023**
(21) Application number: 23175996.0
(22) Date of filing: 30.05.2023
(51) Int. Cl.: F16H 57/02

(54) **CASING, SPEED REDUCER AND ROBOT**

(30) Priority: 02.06.2022 JP 2022090272
(71) Applicant: Nabtesco Corporation, Tokyo 102-0093 (JP)
(72) Inventor: Kihira, Masato, Chiyoda-ku, Tokyo (JP); Kurihara, Naoki, Chiyoda-ku, Tokyo (JP)
(74) Representative: Grünecker Patent- und Rechtsanwälte PartG mbB

(57) **Abstract**

One aspect of the present invention provides a casing (210) constituted by two or more parts (21 0A, 21 0B and 210C) that are separate and arranged next to each other in a main axis (F0) direction.

## Description

### TECHNICAL FIELD

The present invention relates to a casing, a speed reducer and a robot, and more specifically, relates to techniques suitably used in large-sized speed reducers.

### BACKGROUND

Industrial robots and machine tools may require large-sized speed reducers.

In particular, Patent Literature 1 illustrates, as an example, a speed reducer including a casing (an outer tube) 2 having a mounting hole 2b.

Such large-sized speed reducers may have parts having greater sizes than can be handled by the existing processing machines. More Specifically, if the casings have a very large dimension in the axial direction, the currently available processing machines cannot be utilized to make mounting holes on the outer periphery of the casings. This problem may be solved by dividing the parts into smaller parts. Patent Literature 2 discloses a speed reducer having a casing divided into smaller parts.

### RELEVANT REFERENCES

### LIST OF RELEVANT PATENT LITERATURE

Patent Literature 1: Japanese Patent Application Publication No. 2018-009615
Patent Literature 2: Japanese Patent Application Publication No. 2002-364717

### SUMMARY

As disclosed in Patent Literature 2, however, simply dividing the casing into smaller parts causes another issue. When the smaller parts are assembled together, coupling alignment cannot be completed, which is crucial for the speed reducer. The coupling alignment may be successfully performed with assembling jigs. Otherwise, assembling requires excessively complicated work. Thus, the technique disclosed in Patent Literature 2 is disadvantageous from the perspective of feasibility and practicality.

It may be proposed to manufacture processing machines that can handle large-sized speed reducers. In reality, however, processing machines are hardly available that can satisfy criteria for speed reducer manufacturing, for example, accuracy requirement.

One object of the present invention is to use existing processing machines to manufacture large-sized speed reducers.

An aspect of the present invention provides a casing including a casing body for rotatably holding a shaft via at least one main bearing. The casing body is divided into two or more parts arranged next to each other in a main axis direction of the shaft.

The above-described casing is divided into the parts, which have a smaller dimension in the main axis direction than the casing. In addition, coupling alignment between the parts can be easily performed by means of the main bearing. Thus, the parts to be subject to processing can have a reduced dimension, so that they can be easily processed with processing machines.

In the implementation, the parts of the casing body may include a first casing and a second casing, and the first casing may have a step onto which the main bearing is fitted.

In the implementation, the second casing may be positioned by an outer race of the main bearing.

In the implementation, the casing body may be divided such that, in the main axis direction, a dividing site of the casing body coincides with a position of the main bearing.

In the implementation, the casing body may be divided into three parts arranged next to each other in the main axis direction, and, in the main axis direction, two dividing sites of the casing body may coincide with positions of two main bearings arranged next to each other in the main axis direction.

In the implementation, the casing body may have a tubular shape, and an outer periphery of the casing body may have a mounting groove extending parallel to the main axis direction.

In the implementation, the parts may be fastened together by a fastening member placed in the mounting groove.

Another aspect of the present invention provides a speed reducer including a shaft; at least one main bearing; and a casing having a casing body for rotatably holding the shaft via the main bearing. The casing body is divided into two or more parts arranged next to each other in a main axis direction of the shaft.

Although having a large size, the present speed reducer can be manufactured using existing processing machines. In particular, the processing machines are allowed to more readily perform intended work that requires moving in the main axis direction.

In the implementation, the parts of the casing body may include a first casing and a second casing, and the first casing may have a step onto which the main bearing is fitted.

In the implementation, the second casing may be positioned by an outer race of the main bearing.

In the implementation, the casing body may be divided such that, in the main axis direction, a dividing site of the casing body coincides with a position of the main bearing.

In the implementation, the casing body may be divided into three parts arranged next to each other in the main axis direction, and, in the main axis direction, two dividing sites of the casing body may coincide with positions of two main bearings arranged next to each other in the main axis direction.

In the implementation, the casing body may have a tubular shape, and an outer periphery of the casing body may have a mounting groove extending parallel to the main axis direction.

In the implementation, the parts may be fastened together by a fastening member placed in the mounting groove.

Another aspect of the present invention provides a robot including a speed reducer; a drive unit; and a driven unit configured to be driven by a driving force transmitted through the speed reducer from the drive unit. The speed reducer includes: a shaft; a main bearing; and a casing having a casing body for rotatably holding the shaft via the main bearing. The casing body is divided into two or more parts arranged next to each other in a main axis direction of the shaft.

The robot can be readily manufactured using existing processing machines.

### ADVANTAGEOUS EFFECTS

The present invention allows existing processing machines to readily manufacture a casing, a speed reducer, and a robot.

### BRIEF DESCRIPTION OF THE DRAWINGS

Fig. 1 is a sectional view showing a speed reducer relating to an embodiment of the present invention along the axial direction.
Fig. 2 is a front view showing a casing relating to an embodiment of the present invention in the axial direction.
Fig. 3 shows an expanded sectional view of the casing relating to the embodiment of the present invention.

### DESCRIPTION OF THE PREFERRED EMBODIMENTS

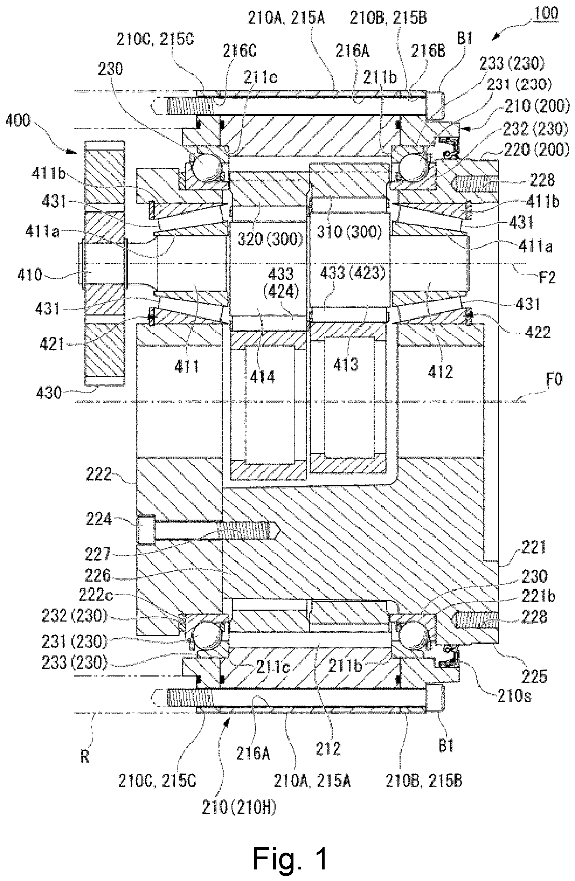

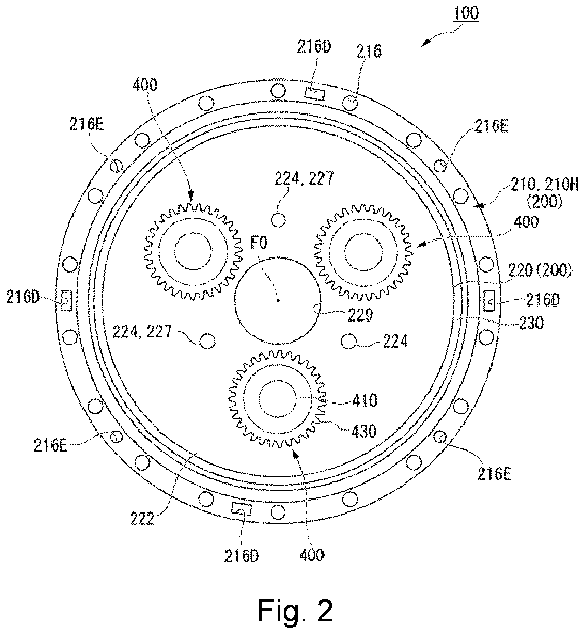

The following describes a casing, a speed reducer, a robot relating to embodiments of the present invention with reference to the accompanying drawings. Fig. 1 is a sectional view showing a speed reducer relating to an embodiment along the axial direction. Fig. 2 is a front view showing the speed reducer relating to the embodiment in the axial direction. In the drawings, the reference numeral 100 indicates the speed reducer.

The speed reducer 100 includes a cylindrical housing 200, a gear unit (an externally toothed member) 300, and three crank assemblies 400, as shown in Figs. 1 to 3. The cylindrical housing 200 houses therein the gear unit 300 and three crank assemblies 400. The speed reducer 100 is constituted as an eccentric oscillating speed reducer.

The cylindrical housing 200 includes a casing 210, a carrier 220, and two main bearings 230. The carrier 220 is disposed inside the casing 210. The two main bearings 230 are disposed between the casing 210 and the carrier 220. The two main bearings 230 allow the relative rotation of the casing 210 and the carrier 220. According to one example, one of the casing 210 and the carrier 220 serves as the output portion of the speed reducer 100.

Fig. 1 shows the central axis (main axis) F0 of the speed reducer 100, which is defined as the axis of rotation for the two main bearings 230. When the casing 210 is stationary, the carrier 220 rotates about the main axis F0. When the carrier 220 is stationary, the casing 210 rotates about the main axis F0. In other words, one of the casing 210 and the carrier 220 can rotate relative to the other around the main axis F0. Hereinafter, the term "main axis direction" refers to the direction along the central axis (main axis) F0 of the speed reducer 100, which is the axis of rotation for the two main bearings 230.

The cylindrical casing 210 has a casing body 210H, which is divided into parts arranged next to each other in the main axis direction. More specifically, the casing body 210H is constituted by cylindrical first, second and third casings 210A, 210B and 210C. In the following description, the casing body 210H and the casing 210 are interchangeably used. The first, second and third casings 210A, 210B and 210C all have the same dimension in the radial direction. The first, second and third casings 210A, 210B and 210C are arranged such that they are centered on the same main axis F0. When assembled, the second casing 210B, first casing 210A and third casing 210C are arranged in the stated order in the main axis F0 direction.

On the first casing 210A, a plurality of internal tooth pins (internal teeth) 212 are provided. The first casing 210A forms a cylindrical internal space that contains the carrier 220, the gear unit 300 and the crank assemblies 400. The internal tooth pins 212 are columnar members extending parallel to the main axis F0. The internal tooth pins 212 are fitted in grooves formed in the inner wall of the first casing 210A. Therefore, the internal tooth pins 212 are appropriately retained by the first casing 210A.

The internal tooth pins 212 are arranged at regular intervals around the main axis F0. Each internal tooth pin 212 has a semicircle surface projecting from the inner wall of the first casing 210A toward the main axis F0. Therefore, the internal tooth pins 212 serve as internal teeth meshing with the gear unit 300. The second and third casings 210B and 210C are formed such that they do not touch the internal tooth pins 212.

The split plane of the casing 210, i.e., the plane where the first and second casings 210A and 210B meet, extends at least along a direction perpendicular to the main axis F0. The plane where the first and third casings 210A and 210C meet extends at least along a direction perpendicular to the main axis F0. In the plane where the first and second casings 210A and 210B meet, a seal 211s entirely extends around the main axis F0. In the plane where the first and third casings 210A and 210C meet, a seal 211s entirely extends around the main axis F0. The seals 211s are each formed by a sealing member such as an O-ring placed in a sealing groove.

The main bearings 230 are in contact with the inner circumferential surface of the casing 210 at the dividing sites. In other words, in the main axis direction, the dividing sites of the casing 210 coincide with the positions of the main bearings 230. Stated differently, on the inner circumferential surface of the casing 210, one of the two main bearings 230 is in contact at its outer periphery with the boundary between the first casing 210 and the second casing 210B. On the inner circumferential surface of the casing 210, the other of the two main bearings 230 is in contact at its outer periphery with the boundary between the first casing 210 and the third casing 210C.

The inner circumferential surface of the first casing 210A has steps 211b and 211c, which are positioned correspondingly to the ends of the main bearings 230 in the main axis direction. One of the main bearings 230 that is in contact with the second casing 210B is fitted onto the step 211b. One of the main bearings 230 that is in contact with the third casing 210C is fitted onto the step 211c. The inner circumferential surface of the first casing 210A has a smaller diameter at the portion between the steps 211b and 211c.

On the outer periphery of the first casing 210A, a flange 215A is provided and protrudes. On the outer periphery of the second casing 210B, a flange 215B is provided and protrudes. On the outer periphery of the third casing 210C, a flange 215C is provided and protrudes. The flange 215A has a plurality of mounting holes (mounting grooves) 216A, the flange 215B a plurality of mounting holes (mounting grooves) 216B, and the flange 215C a plurality of mounting holes (mounting groves) 216C. The mounting holes 216A, 216B and 216C extend in the main axis direction. The mounting holes 216A, 216B and 216C are spaced away from each other in the circumferential direction in the flanges 215A, 215B and 215C, respectively. The flanges 215A, 215B and 215C are used to attach the casing 210 of the speed reducer 100 to a robot or the like, which will be described below. The flanges 215A, 215B and 215C are also used to assemble the first, second and third casings 210A, 210B and 2100.

The flange 215A of the first casing 210A butts up against the flange 215B of the second casing 210B at one of the split planes of the casing 210. The flange 215A of the first casing 210A butts up against the flange 215C of the third casing 210C at the other of the split planes of the casing 210.

In the present embodiment, the mounting holes 216A, 216B and 216C are through holes extending along the main axis direction. Alternatively, the mounting holes 216A, 216B, 216C may be open at the outer periphery of the casing 210, so that they are in the form of grooves. The mounting holes 216A, 216B and 216C receive, as fastening members, large-diameter bolts B1 in the main axis direction. The large-diameter bolts B1 fasten together the first, second and third casings 210A, 210B and 2100.

The mounting holes 216A, 216B and 216C are aligned with each other, when viewed in the main axis direction. The mounting holes 216A, 216B, and 216C have the same diameter.

The flanges 215A, 215B, 215C have temporary fixing holes 216E, which are positioned between the mounting holes (mounting grooves) 216 in the circumferential direction, as shown in Fig. 2. The temporary fixing holes 216E are used to temporarily secure the first, second and third casings 210A, 210B and 210C to each other when the casing 210 and the carrier 220 are assembled, for example.

The temporary fixing holes 216E are smaller in diameter than the mounting holes 216A, 216B and 216C. The temporary fixing holes 216E(see Fig. 2) can be used to temporarily secure the first, second and third casings 210A, 210B and 210C by means of small temporary fixing bolts (fastening members) (not shown). The temporary fixing holes 216E in the first casing 210A are through holes extending in the main axis direction. The temporary fixing holes 216E in the second and third casings 210B and 210C have internal threads corresponding to the external threads at the ends of the temporary fixing bolts (fastening members). The first, second and third casings 210A, 210B, and 210C are temporarily fixed by means of the temporary fixing bolts.

As shown in Fig. 2, the flanges 215A, 215B and 215C have suspension rings 216D. The suspension rings 2160 are positioned between the mounting holes 216A, 216B, and 216C in the circumferential direction. A sealing member 210s is provided between the inner circumferential surface of the second casing 210B and the carrier 220. The sealing member 210s is positioned outside the main bearings 230 in the main axis direction. The sealing member 210s entirely extends around the main axis F0.

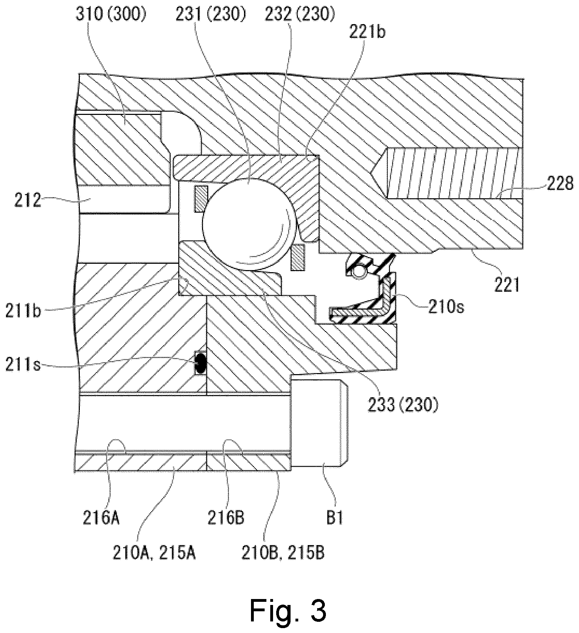

The main bearings 230 each have balls 231, an inner race (inner ring) 232, and an outer race (outer ring) 233, as shown in Figs. 1 and 3. The inner race 232 is in contact with the carrier 220 at its inner periphery. The inner periphery of the inner race 232 is fitted onto a step 221b of a base 221, which will be described below. The edge of the inner race 232 is fitted onto a step 222c of an end plate (hold) 222, which will be described below.

The outer circumferential surfaces of the outer races 233 are in contact with the inner circumferential surfaces of the steps 211b and 211c of the first casing 210A and also with the inner circumferential surface of the second casing 210B and the inner circumferential surface of the third casing 210C. The opposing end surfaces of the outer races 233 facing in the main axis direction are in contact with the steps 211b and 211c of the first casing 210A. In this manner, the first, second and third casings 210A, 210B and 210C are concentrically assembled and coupling-aligned with each other.

The carrier 220 includes a base 221, an end plate 222, positioning pins, which are not shown, and support bolts 224. The base 221 and end plate 222 together serve as a shaft recited in the claims, for example. The carrier 220 as a whole is shaped like a cylinder. The carrier 220 has a through hole formed therein, which is centered around the main axis F0.

The base 221 includes a base plate 225 and three shafts 226. The three shafts 226 extend from the base plate 225 toward the end plate 222. The end surface of each shaft 226 has a screw hole 227 and a reaming hole formed therein. The reaming hole is not shown. The positioning pins are inserted into the reaming holes. This in turn accurately positions the end plate 222 relative to the base 221. The base 221 has mounting holes 228 formed in the end face facing away from the end plate 222.

The support bolts 224 are fastened into the screw holes 227. This in turn appropriately secures the end plate 222 to the base 221. The support bolts 224 secures the base 221 and end plate 222 such that the base 221 and end plate 222 have a common center. The end plate 222 is referred to as a hold.

The gear unit 300 is disposed between the base plate 225 and the end plate 222. The three shafts 226 extend through the gear unit 300 and are connected to the end plate 222.

The gear unit 300 includes two gears 310 and 320. The gear 310 is disposed between the base plate 225 and the gear 320. The gear 320 is disposed between the end plate 222 and the gear 310.

The two gears 310 and 320 have the same shape and size. The gears 310 and 320 circle within the first casing 210A while meshing with the internal tooth pins 212. In other words, the respective centers of the gears 310 and 320 circle around the main axis F0.

The circling of the gear 310 is out of phase with the circling of the gear 320 by 180°. While the gear 310 meshes with half of the internal tooth pins 212 of the casing 210, the gear 320 meshes with the remaining half of the internal tooth pins 212. In this way, the gear unit 300 can rotate one of the casing 210 and the carrier 220.

In the present embodiment, the gear unit 300 includes the two gears 310 and 320, but the present invention is not limited to such. The gear unit may alternatively include more than two gears. As another alternative example, the gear unit may include a single gear.

Each of the three crank assemblies 400 includes a crankshaft 410, four bearings 421, 422, 423 and 424 and a transmission gear (external teeth) 430. The transmission gear 430 may be a commonly used spur gear. The transmission gear 430, however, is not limited to any particular type.

The transmission gear 430 directly or indirectly receives the driving force generated by a driving source (for example, a motor). The speed reducer 100 can designate an appropriate one of transmission paths for the driving force from the driving source to the transmission gear 430 depending on the environment where and conditions under which the speed reducer 100 is used. Accordingly, the present embodiment is not limited to any particular transmission path for the driving force transmitted from the driving source to the transmission gear 430.

Fig. 1 shows a transmission axis (crankshaft axis) F2. The transmission axis F2 is parallel to the main axis F0. The crankshaft 410 rotates about the transmission axis F2. The crankshaft 410 includes two journals (crank journals) 411, 412 and two eccentric portions (eccentric members) 413, 414. The journals 411, 412 extend along the transmission axis F2. The axis of the journals 411, 412 coincides with the transmission axis F2. The eccentric portions 413, 414 are arranged between the journals 411 and 412. Each of the eccentric portions 413 and 414 is eccentrically arranged with respect to the transmission axis F2.

The journal 411 is supported by the end plate 222 via the bearing 421. The journal 412 is supported by the base 221 via the bearing 422. Each of the bearings 421 and 422 is formed as a needle bearing, having a plurality of needles 431, an inner race 411a, and an outer race 411b arranged around a corresponding one of the journals 411 and 412. The eccentric portion 413 supports the gear 310 via the bearing 423. The eccentric portion 414 supports the gear 320 via the bearing 424. Each of the bearings 423 and 424 is formed as a needle bearing, having a plurality of needles 433 arranged around a corresponding one of the eccentric portions 413 and 414.

As the driving force is input into the transmission gear 430, the crankshaft 410 rotates about the transmission axis F2. This in turn causes the eccentric portions 413 and 414 to eccentrically rotate about the transmission axis F2. The gears 310 and 320, which are connected to the eccentric portions 413 and 414 via the bearings 423 and 424, resultantly oscillate within the circular space defined by the casing 210. The gears 310, 320 mesh with the internal tooth pins 212, and this in turn causes relative rotation between the casing 210 and the carrier 220.

As described above, the speed reducer 100 has the casing 210, which is divided into parts arranged next to each other in the main axis direction, as shown in Figs. 1 to 3. The casing 210 is divided into the casings 210A, 210B and 210C, which each have a smaller dimension in the main axis direction than the casing 210 obtained by assembling together the casings 210A, 210B and 210C. During the process of manufacturing the speed reducer 100, the parts obtained by dividing the casing 210 can have a smaller dimension in the main axis direction.

Here, the inner circumferential surface of the first casing 210A has the steps 211b and 211c. The outer races 233 of the main bearings 230 are in contact with the steps 211b and 211c of the first casing 210A, with the inner circumferential surface of the second casing 210B and with the inner circumferential surface of the third casing 210C.

The main bearings 230 cover some parts of the inner circumferential surface of the casing 210 that correspond to the dividing sites. In other words, the dividing sites of the casing 210 coincide with the positions of the main bearings 230. Specifically, the boundary between the first casing 210A and the second casing 210B is in contact with the outer periphery of the outer race 233 of the corresponding main bearing 230. The boundary between the first casing 210A and the third casing 210C is in contact with the outer periphery of the outer race 233 of the corresponding main bearing 230. With such arrangement, the separate parts (the first, second and third casings 210A, 210B an 210C) can be easily coupling-aligned with each other via the main bearings 230. As a result, processing machines can be used to process the respective parts. In particular, the processing machines are allowed to more readily perform intended work that requires moving in the main axis direction.

More specifically, the existing processing machines can be used to form the mounting holes (mounting grooves) 216A, 216B and 216C extending in the main axis direction, in the casings 210A, 210B and 210C. The casings 210A, 210B and 210C can be concentrically assembled and coupling-aligned with each other. At the same time, the casing 210 and carrier 220 can be concentrically assembled and coupling-aligned with each other. Specifically, the coupling-alignment can be successfully performed since the steps 211b and 211c are provided and the main bearings 230 are fitted onto the first casing 210A. The outer races 233 of the main bearings 230 can be used to position the second and third casings 210B and 210C.

The flange 215A of the first casing 210A abuts against the flange 215B of the second casing 210B and against the flange 215C of the third casing 210C. The flanges 215A, 215B and 215C respectively have the mounting holes 216A, 216B and 216C. Since the bolts B1 penetrate through the mounting holes 216A, 216B and 216C and are fastened, the casings 210A, 210B and 210C can be assembled together while being coupling-aligned. At the same time, the casing 210 and carrier 220 can be concentrically assembled and coupling-aligned with each other.

The speed reducer 100 can have a diameter greater than, for example, 50 mm. In the speed reducer 100, for example, the first casing 210A has a greater dimension in the main axis direction than the second and third casings 210B and 210C. The dimension of the first casing 210A in the main axis direction is greater than the sum of the dimension of the second casing 210B in the main axis direction and the dimension of the third casing 210C in the main axis direction. The sum of the dimension in the main axis direction of the second casing 210B and the dimension in the main axis direction of the third casing 210C may be less than half the dimension in the main axis direction of the first casing 210A.

The following now describes how to coupling-align and assemble the parts of the speed reducer 100.

To begin with, the base 221 having the shafts 226 is provided. To center-align and assemble the parts of the speed reducer 100, the parts may be supported and held using specific members and jigs for placing and hanging the parts. Those specific members and jigs may not be described herein.

After this, the inner race 232 of the corresponding main bearing 230 is fitted onto the outer periphery of the base 221. Here, the edge of the inner race 232 butts up against the step 221b of the base 221. As a result, the base 221 and inner race 232 can be concentrically arranged and centered on the main axis F0.

Following this, the balls 231 are placed on the inner race 232. From above them, the outer race 233 is assembled, so that the main bearing 230 that is in contact with the second casing 210B is completed. Here, the base 221 and outer race 233 can be concentrically arranged and centered on the main axis F0. In addition, the base 221 and main bearing 230 can be concentrically arranged and centered on the main axis F0.

Subsequently, the second casing 210B is fitted onto the outer periphery of the main bearing 230 that has been fitted onto the base 221. The inner periphery of the second casing 210B butts up against the outer race 233.

Subsequently, the first casing 210A is fitted onto the outer periphery of the main bearing 230 that has been fitted onto the base 221, such that the first and second casings 210A and 210B can be aligned with the same axis. Here, the inner periphery of the end of the first casing 210A butts up against the outer race 233. At the same time, the edge of the outer race 233 butts up against the step 211b of the first casing 210A. Due to the presence of the step 211b, the first casing 210A and outer race 233 can be concentrically arranged and centered on the main axis F0. At the same time, due to the presence of the step 211b, the first casing 210A and outer race 233 can be placed at expected positions in the main axis direction. On the surface of the first casing 210A that touches the second casing 210B, a sealing member such as an O-ring can be placed in a groove of the seal 211s in advance.

After this, the outer race 233 of the corresponding bearing 230 that is configured to butt up against the third casing 210C is fitted onto the step 211c of the first casing 210A. Here, before the first case 210A is fitted onto the outer-periphery of the main bearing 230 that has been fitted onto the base 221, the outer race 233 may be fitted onto the step 211c of the first casing 210A in advance. Due to the presence of the step 211c, the first casing 210A and outer race 233 can be concentrically arranged and centered on the main axis F0. At the same time, due to the presence of the step 211c, the first casing 210A and outer race 233 can be placed at expected positions in the main axis direction. This means that the steps 211b and 211c can contribute to place the first casing 210A and base 221 at expected positions in the main axis direction.

Subsequently, the third casing 210C is fitted onto the outer periphery of the outer race 233 that has been fitted onto the step 211c of the first casing 210A, such that the third and first casings 210C and 210A can be aligned with the same axis. Here, the inner periphery of the end of the third casing 210C butts up against the outer race 233. On the surface of the first casing 210A that touches the third casing 210C, a sealing member such as an O-ring can be placed in a groove of the seal 211s in advance.

Following this, the balls 231 are placed on the outer race 233. From above the balls 231, the inner race 232 is assembled, so that the main bearing 230 that is in contact with the third casing 210C is completed. Here, the edge of the inner race 232 butts up against the step 222c of the end plate 222. As a result, the third casing 210C, end plate 222 and inner race 232 can be concentrically arranged and centered on the main axis F0. In addition, the third casing 210C, end plate 222 and main bearing 230 can be concentrically arranged and centered on the main axis F0.

Here, before fitted onto the base 221, the inner race 232 and end plate 222 may be assembled together in advance.

Before the end plate 222 is assembled, the internal tooth pins 212, gear unit 300, crank assemblies 400 and the like may be assembled with the base 221 so that a shaft assy can be provided.

Here, the end plate 222 and inner race 232 are aligned with the base 221 and outer race 233, so that all are centered on the main axis F0. In addition, the third casing 210C, carrier 220 and main bearing 230 can be concentrically arranged and centered on the main axis F0.

Under these circumstances, the support bolts 224 are fastened into the screw holes 227. This secures the end plate 222 to the base 221. Since the support bolts 224 secure the base 221 and end plate 222, the base 221 and end plate 222 can be centered on the same axis.

Under these circumstances, the temporary fixing bolts are inserted into the temporary fixing holes 216E of the casings 210A, 210B and 210C and fastened. The casings 210A, 210B and 210C are temporarily fixed. In this manner, the casing 210, carrier 220, and two main bearings 230 are coupling-aligned and assembled. Here, the large-diameter bolts B1 may not be yet used in the mounting holes 216. Further necessary assembling steps are performed. For example, the sealing member 210s may be placed at a position between the second casing 210B and the carrier 220 and outside the main bearings 230 in the main axis direction.

For example, the speed reducer 100 can be transported so that it can be connected to a driving system such as a robot, once its necessary parts are assembled together other than the large-diameter bolts B1.

After this, the bolts B1 are inserted into the mounting holes 216, so that the first, second and third casings 210A, 210B and 210C are concentrically assembled and the speed reducer 100 is mounted onto a robot or the like. Here, the speed reducer 100 can be mounted using the mounting holes 228. After this, the temporary fixing bolts (fastening members) can be removed.

In this manner, the parts of the speed reducer 100 relating to the present embodiment can be completely coupling-aligned and assembled.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### LIST OF REFERENCE NUMBERS

- 100: speed reducer
- 210: casing
- 210A: first casing
- 210B: second casing
- 210C: third casing
- 210H: casing body
- 215: flange
- 216: mounting hole (mounting groove)
- 220: carrier
- 221: base (shaft)
- 222: end plate (shaft)
- 224: support bolt
- 230: main bearing
- 232: inner race
- 233: outer race
- B1: bolt (fastening member)
- F0: center axis (main axis)

## Claims

1. A casing (210) comprising
a casing body (210H) for rotatably holding a shaft (221, 222) via at least one main bearing (230),
wherein the casing body (210H) is divided into two or more parts arranged next to each other in a main axis (F0) direction of the shaft (221, 222).

2. The casing (210) of claim 1,
wherein the parts of the casing body (210H) include a first casing (210A) and a second casing (210B), and
wherein the first casing (210A) has a step (211b, 211c) onto which the main bearing (230) is fitted.

3. The casing (210) of claim 2, wherein the second casing (210B) is positioned by an outer race (233) of the main bearing (230).

4. The casing (210) of any one of claims 1 to 3, wherein the casing body (210H) is divided such that, in the main axis (F0) direction, a dividing site of the casing body (210H) coincides with a position of the main bearing (230).

5. The casing (210) of claim 4,
wherein the casing body (210H) is divided into three parts arranged next to each other in the main axis (F0) direction, and
wherein, in the main axis (F0) direction, two dividing sites of the casing body (210H) coincide with positions of two main bearings (230) arranged next to each other in the main axis (F0) direction.

6. The casing (210) of claim 5,
wherein the casing body (210H) has a tubular shape, and
wherein an outer periphery of the casing body (210H) has a mounting groove (216) extending parallel to the main axis (F0) direction.

7. The casing (210) of claim 6, wherein the parts are fastened together by a fastening member (B1) placed in the mounting groove (216).

8. A speed reducer (100) comprising:
a shaft (221, 222);
at least one main bearing (230); and
a casing (210) having a casing body (210H) for rotatably holding the shaft (221, 222) via the main bearing (230),
wherein the casing body (210H) is divided into two or more parts arranged next to each other in a main axis (F0) direction of the shaft (221, 222).

9. The speed reducer (100) of claim 8,
wherein the parts of the casing body (210H) include a first casing (210A) and a second casing (210B), and
wherein the first casing (210A) has a step (211b, 211c) onto which the main bearing (230) is fitted.

10. The speed reducer (100) of claim 9, wherein the second casing (210B) is positioned by an outer race (233) of the main bearing (230).

11. The speed reducer (100) of any one of claims 8 to 10, wherein the casing body (210H) is divided such that, in the main axis (F0) direction, a dividing site of the casing body (210H) coincides with a position of the main bearing (230).

12. The speed reducer (100) of claim 11,
wherein the casing body (210H) is divided into three parts arranged next to each other in the main axis (F0) direction, and
wherein, in the main axis (F0) direction, two dividing sites of the casing body (210H) coincide with positions of two main bearings (230) arranged next to each other in the main axis (F0) direction.

13. The speed reducer (100) of claim 12,
wherein the casing body (210H) has a tubular shape, and
wherein an outer periphery of the casing body (210H) has a mounting groove (216) extending parallel to the main axis (F0) direction.

14. The speed reducer (100) of claim 13, wherein the parts are fastened together by a fastening member (B1) placed in the mounting groove (216).

15. A robot comprising:
a speed reducer (100);
a drive unit; and
a driven unit configured to be driven by a driving force transmitted through the speed reducer (100) from the drive unit,
wherein the speed reducer (100) includes:
a shaft (221, 222);
a main bearing (230); and
a casing (210) having a casing body (210H) for rotatably holding the shaft (221, 222) via the main bearing (230),
wherein the casing body (210H) is divided into two or more parts arranged next to each other in a main axis (F0) direction of the shaft (221, 222).
